# EUROPÄISCHE PATENTSCHRIFT

(11) **EP 3 927 918 B1**
(45) Veröffentlichungstag und Bekanntmachung des Hinweises auf die Patenterteilung: **26.07.2023**
(21) Anmeldenummer: 20705030.3
(22) Anmeldetag: 10.02.2020
(51) Int. Cl.: E04H 12/02, E04H 12/08, F03D 1/06, F03D 13/20

(54) **WINDENERGIEANLAGEN-KOMPONENTE FÜR EINEN WINDENERGIEANLAGEN-TURM, WINDENERGIEANLAGEN-TURM, ROTORBLATT, WINDENERGIEANLAGE UND VERFAHREN ZUR HERSTELLUNG EINER WINDENERGIEANLAGEN-KOMPONENTE**
WIND TURBINE COMPONENT FOR A WIND TURBINE TOWER, WIND TURBINE TOWER, ROTOR BLADE, WIND TURBINE AND METHOD FOR PRODUCING A WIND TURBINE COMPONENT
COMPOSANT D'ÉOLIENNE POUR UNE TOUR D'ÉOLIENNE, TOUR D'ÉOLIENNE, PALE DE ROTOR, ÉOLIENNE ET PROCÉDÉ DE FABRICATION D'UN COMPOSANT D'ÉOLIENNE

(30) Priorität: 18.02.2019 DE 102019103984
(43) Veröffentlichungstag der Anmeldung: 29.12.2021
(73) Patentinhaber: Wobben Properties GmbH, 26607 Aurich (DE)
(72) Erfinder: HOFFMANN, Alexander, 26721 Emden (DE); BRENNER, Albrecht, 26607 Aurich (DE)
(74) Vertreter: Eisenführ Speiser
(86) Internationale Anmeldenummer: PCT/EP2020/053356
(87) Internationale Veröffentlichungsnummer: WO 2020/169393

(56) Entgegenhaltungen:
- EP-A1- 1 624 137
- EP-A2- 2 728 171
- WO-A1-2013/091647
- WO-A2-2011/110605
- CN-A- 106 837 705
- GB-A- 2 479 875
- KR-A- 20150 002 182

## Beschreibung

Die Erfindung betrifft eine Windenergieanlagen-Komponente für eine Windenergieanlage, insbesondere für einen Windenergieanlagen-Turm und/oder ein Rotorblatt, einen Windenergieanlagen-Turm, ein Rotorblatt, eine Windenergieanlage und ein Verfahren zur Herstellung einer Windenergieanlagen-Komponente.

Windenergieanlagen sind bekannt. Moderne Windenergieanlagen betreffen in der Regel sogenannte Horizontalachsen-Windenergieanlagen, bei denen die Rotorachse im Wesentlichen horizontal angeordnet ist und die Rotorblätter eine im Wesentlichen senkrechte Rotorfläche überschreiten. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist.

Türme sind in der Regel schlanke Bauwerke, die vorzugsweise eine große Höhe aufweisen und ferner vorzugsweise orthogonal zu dieser Höhe vergleichsweise geringe Abmessungen aufweisen, also schlank ausgebildet sind. Türme bestehen vorzugsweise im Wesentlichen aus Beton und/oder Stahl oder umfassen diese Materialien. Die Bandbreite von Turmausführungen reicht von Gitterkonstruktion über Stahlrohrtürmen mit oder ohne Seilabspannung bis hin zu Betonbauten.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Insbesondere die größer werdenden Rotordurchmesser und Leistungen von Windenergieanlagen führen dazu, dass auch die Türme größer werden und/oder höheren Belastungen ausgesetzt sind. Die Türme werden einerseits hinsichtlich ihrer Höhe größer und andererseits in Bezug auf ihren Durchmesser, der bei einer Vielzahl heutiger Windenergieanlagen insbesondere in unteren Turmabschnitten bereits 8 Meter und mehr aufweist. Vor allem die Fertigung und/oder die Montage und/oder die Logistik der Türme ist bzw. sind zeit- und kostenaufwendig. Für den Transport von Türmen mit großen Höhen und Durchmessern, werden diese in Längsrichtung und orthogonal zur Längsrichtung geteilt vorgesehen, damit diese beispielsweise unter Brücken hindurch befördert werden können. Ferner ist der Transport von Bauteilen von mehr als 80 Tonnen in der Regel nicht möglich. Die einzelnen quer- und/oder längsgeteilten Türme werden in der Regel am Errichtungsort einer Windenergieanlage wieder zusammengesetzt.

Im Stand der Technik bestehen verschiedene Ansätze zur Reduktion der Kosten und zur Erhöhung der Effizienz bei Fertigung und/oder Montage von Windenergieanlagen-Türmen. Beispielsweise wird in der DE 10 2011 077 428 A1 ein Windenergieanlagen-Turm mit einer Mehrzahl von Turmsegmenten beschrieben, wobei die Turmsegmente an horizontalen und vertikalen Flanschen aneinanderstoßen und hier miteinander befestigt sind.

Das Deutsche Patent- und Markenamt hat in der Prioritätsanmeldung zu vorliegender Anmeldung folgenden Stand der Technik recherchiert: DE 10 2011 077 428 A1, EP 1 624 137 A1, WO 2014/067 884 A1.

CN106837705 A offenbart einen Verbundwerkstoffturm für Windkraftanlagen, der einen inneren Zylinder, einen äußeren Zylinder und eine Verstärkungsschicht umfasst. KR 1020150002182 A offenbart einen Windkraftturm mit gewellten Modulen, der eine Vielzahl von Modulelementen umfasst, die sich in einer Längsrichtung erstrecken und die einen unebenen Teil aufweisen, der in der Breitenrichtung ausgebildet ist, um mindestens eine Wellenlänge zu bilden. GB 2479875 A offenbart ein leichtes, steifes und festes isogitterförmiges (gewelltes) Bauteil, das den inneren Strukturkörper innerhalb einer strukturellen Hülle eines Tragflügels, z. B. eines Windturbinenblattes, bildet. EP 2 728 171 A2 offenbart eine Rotorblattanordnung für eine Windkraftanlage mit einem Ringeinsatz im Blattfußbereich. WO 2011/110605 A2 offenbart ein Windenergieanlagen-Rotorblatt, das eine Rotorblattwurzel, eine Rotorblattspitze, eine Rotorblattvorderkante und eine Rotorblatthinterkante aufweist. WO 2013/091647 A1 offenbart ein Windturbinenblatt, insbesondere ein selbstenteisendes Windturbinenblatt einer Windkraftanlage.

Die existierenden Systeme und Verfahren zum Aufbau und zur Fertigung von Windenergieanlagen-Türmen bieten verschiedene Vorteile, jedoch sind weitere Verbesserungen wünschenswert. Es ist daher eine Aufgabe der vorliegenden Erfindung, eine Windenergieanlagen-Komponente für eine Windenergieanlage, insbesondere für einen Windenergieanlagen-Turm und/oder ein Rotorblatt, einen Windenergieanlagen-Turm, ein Rotorblatt, eine Windenergieanlage und ein Verfahren zur Herstellung einer Windenergieanlagen-Komponente bereitzustellen, welche einen oder mehrere der genannten Nachteile vermindern oder beseitigen. Insbesondere ist es eine Aufgabe der Erfindung, eine Lösung bereitzustellen, die die Kosten einer Windenergieanlage, insbesondere die Kosten der Fertigung und/oder der Montage und/oder der Logistik eines Windenergieanlagen-Turmes und/oder eines Rotorblatts, reduziert. Darüber hinaus ist es eine Aufgabe der Erfindung, eine Lösung bereitzustellen, die eine bessere Transportierbarkeit von Windenergieanlagen-Türmen, bzw. Windenergieanlagen-Turmabschnitten, und/oder von Rotorblättern ermöglicht.

Diese Aufgabe wird gelöst durch eine Windenergieanlagen-Komponente für eine Windenergieanlage nach Anspruch 1.

Das erste Wandelement ist vorzugsweise als Ringsegment oder als Teilringsegment ausgebildet. Dieses weist vorzugsweise eine Rotationsachse auf, die parallel zu einer Länge des ersten Wandelements ausgerichtet ist.

Das erste Wandelement kann auch einen Ringabschnitt ausbilden. Beispielsweise kann das erste Wandelement zwei Ringabschnitte aufweisen, die aneinander angeordnet einen Kreisring ausbilden. Ringförmig kann auch polygonal bedeuten. Die Rotationsachse des ersten Wandelements ist auch für teilringgeometrische erste Wandelemente zu bestimmen.

Das Strukturelement kann auch als Abstandselement verstanden werden. Das Strukturelement ist ferner gewellt ausgebildet. Gewellt bedeutet insbesondere, dass das Strukturelement Wellen und/oder Trapeze aufweist. Das Strukturelement kann über seine gesamte Fläche Wellen aufweisen. Alternativ vorzugsweise kann das Strukturelement abschnittsweise Wellen aufweisen. Die Wellen des Strukturelements können beispielsweise einen sinusförmigen Verlauf aufweisen. Ferner können die Wellen einen gezackten Verlauf oder Trapeze aufweisen. Trapezförmige Wellen haben den Vorteil, dass diese flächige Kontaktbereiche bereitstellen, mit denen das Strukturelement an dem ersten Wandelement angeordnet werden kann. Das Strukturelement kann als Wellblech ausgebildet sein oder ein Wellblech umfassen. Vorzugsweise erstrecken sich die Wellen des Strukturelements von einer ersten Kante des Strukturelements hin zu einer zweiten Kante des Strukturelements.

Der Erfindung liegt die Erkenntnis zugrunde, dass ein gewellter bzw. dickerer Körper eine höhere Steifigkeit aufweist als ein ebener Körper. Der Erfindung liegt insbesondere die Erkenntnis zugrunde, dass ein an einem ersten Wandelement einer Windenergieanlagen-Komponente für einen Windenergieanlagen-Turm oder für ein Rotorblatt angeordnetes gewelltes Strukturelement zu einer höheren Knicksteifigkeit und/oder einer höheren Biegesteifigkeit führt. Durch die erhöhte Knicksteifigkeit und/oder Biegesteifigkeit kann die Windenergieanlagen-Komponente, und infolgedessen auch der Windenergieanlagen-Turm als solcher oder das Rotorblatt als solches, schlanker im Gesamtdurchmesser ausgebildet werden.

Durch diese schlankere Ausbildung kann Material eingespart werden, da die Festigkeit und Stabilität besser abgestimmt werden kann. Darüber hinaus vereinfacht sich die Fertigung der Windenergieanlagen-Komponente, da das Bewegen aufgrund des niedrigen Gewichts der Windenergieanlagen-Komponente in der Fertigung einen geringeren Aufwand erfordert. Darüber hinaus sind kleinere Maschinen notwendig, um die Windenergieanlagen-Komponente zu bearbeiten. Ferner ist die Logistik vereinfacht. Insbesondere können Windenergieanlagen-Komponenten mit geringeren Abmessungen vorgesehen werden, sodass deren Transport auf der Straße vereinfacht ist. Beispielsweise werden regelmäßig nur solche Windenergieanlagen-Komponenten vorgesehen, die 4,3 Meter nicht überschreiten. Dies begründet sich darin, dass z.B. Brücken in Deutschland oftmals eine Durchfahrtsbeschränkung für Fahrzeuge mit mehr als 4,3 Metern haben. Darüber hinaus kann der Anteil an segmentierten Windenergieanlagen-Komponenten reduziert werden und der Montageaufwand reduziert sich weiter.

In einer bevorzugten Ausführungsvariante der Windenergieanlagen-Komponenten ist vorgesehen, dass das erste Wandelement schalenförmig und/oder rotationssymmetrisch ausgebildet ist. Das erste Wandelement kann auch oval und/oder polygonal ausgebildet sein.

Ein schalenförmiges erstes Wandelement ist insbesondere als ein zumindest abschnittsweise gekrümmtes Element zu verstehen. Ein rotationsymmetrisches erstes Wandelement weist insbesondere einen Querschnitt auf, der kreisrund und/oder polygonal ist. Darüber hinaus kann das erste Wandelement oval ausgebildet sein, wobei mit einer ovalen Ausbildung insbesondere vorherrschende Windrichtungen bei der Dimensionierung eines Windenergieanlagen-Turmes berücksichtigt werden können.

Gemäß einer weiteren bevorzugten Ausführungsvariante der Windenergieanlagen-Komponente ist vorgesehen, dass das Strukturelement schalenförmig und/oder rotationssymmetrisch ausgebildet ist, und vorzugsweise im Wesentlichen zylinderförmig und/oder kegelförmig ausgebildet ist.

Dies bedeutet insbesondere, dass die Makrogeometrie des Strukturelements schalenförmig und/oder rotationssymmetrisch und/oder zylinderförmig ausgebildet ist. Das Strukturelement weist jedoch innerhalb dieser schalenförmig und/oder rotationssymmetrischen und/oder zylinderförmigen Geometrie die gewellte Struktur auf. Ein derartig ausgebildetes Strukturelement kann insbesondere die Makrogeometrie des ersten Wandelements annehmen.

Das Strukturelement kann auch aus zwei oder mehreren Strukturelementabschnitten bestehen oder diese umfassen. Beispielsweise kann das Strukturelement in Richtung einer Rotationsachse der Windenergieanlagen-Komponente mehrere benachbart zueinander angeordnete Strukturelementabschnitte aufweisen. Darüber hinaus kann das Strukturelement mehrere horizontal benachbarte Strukturelementabschnitte aufweisen.

Eine weitere bevorzugte Fortbildung der Windenergieanlagen-Komponente zeichnet sich dadurch aus, dass das erste Wandelement mit dem Strukturelement mittels eines Klebstoffmaterials verbunden ist, und/oder die Verbindung zwischen dem ersten Wandelement und dem Strukturelement schweißverbindungsfrei ausgebildet ist.

Die Verbindung des ersten Wandelements mit dem Strukturelement mittels eines Klebstoffmaterials hat den Vorteil, dass die Verbindungspartner im Wesentlichen nicht verbindungstechnisch beeinflusst werden. Dies bedeutet insbesondere, dass das Material des ersten Wandelements und des Strukturelements durch den Kontakt mit dem Klebstoffmaterial im Wesentlichen nicht beeinflusst wird. Insbesondere im Vergleich zur schweißtechnischen Verbindung entsteht somit keine oder lediglich eine geringe lokale Erhitzung und somit Aufhärtung, die oftmals zu einer Versprödung des Materials führt.

In einer bevorzugten Ausführungsvariante der Windenergieanlagen-Komponente ist ferner vorgesehen, dass sich das erste Wandelement mit einer Wandelementlänge zwischen einer ersten Stoßseite und einer zweiten Stoßseite erstreckt und sich das Strukturelement zwischen der ersten Stoßseite und der zweiten Stoßseite mit einer Strukturelementlänge erstreckt, und die Strukturelementlänge im Wesentlichen der Wandelementlänge entspricht.

In Richtung der Wandelementlänge ist das Strukturelement bei dieser Ausführungsvariante insbesondere einstückig ausgebildet. Die Wandelementlänge kann beispielsweise 6 Meter oder 12 Meter betragen. Vorzugsweise ist die Wandelementlänge größer 4 Meter, oder größer 5 Meter, oder größer 6 Meter. Dies schließt jedoch nicht aus, dass dieses quer zur Richtung der Wandelementlänge mehrere Strukturelementabschnitte aufweist. Vorzugsweise entspricht die Strukturelementlänge mehr als 50 %, mehr als 60 %, mehr als 70 %, mehr als 80 % oder mehr als 90 % der Wandelementlänge. Die Wandelementlänge kann beispielsweise parallel zur Längsrichtung eines Turmabschnittes oder eines Rotorblattes ausgerichtet sein, wobei die Längsrichtung parallel zu einer Rotationsachse der Windenergieanlagen-Komponente sein kann.

Eine weitere bevorzugte Fortbildung der Windenergieanlagen-Komponente zeichnet sich dadurch aus, dass das Strukturelement eine Vielzahl an Wellen aufweist, wobei mindestens eine Welle einen Verbindungsabschnitt umfasst, und das Strukturelement mittels des Verbindungsabschnitts mit dem ersten Wandelement verbunden ist.

Der Verbindungsabschnitt erstreckt sich vorzugsweise in einer Haupterstreckungsrichtung und in einer Verbindungsbreite. Die Haupterstreckungsrichtung ist vorzugsweise parallel zu der Wandelementlänge, die Breite des Verbindungsabschnitts ist quer hierzu. Die Verbindungsbreite beträgt vorzugsweise zwischen 1 mm und 200 mm, wobei insbesondere zwischen 3 mm und 100 mm bevorzugt ist.

Orthogonal zu der Haupterstreckungsrichtung des Verbindungsabschnitts weist das Strukturelement vorzugsweise einen Strukturelement-Querschnitt auf. Der Strukturelement-Querschnitt weist vorzugsweise einen wellenförmigen Verlauf auf. Der wellenförmige Verlauf kann vorzugsweise mit einer Wellenlänge und einer Schwingweite beschrieben werden. Die Schwingweite wird senkrecht zur Wellenlänge gemessen. Der Abstand zwischen zwei gegenüberliegend angeordneten Verbindungsabschnitten wird auch als Spitze-Tal-Wert beschrieben und entspricht der doppelten Amplitude. Daraus folgt, dass die Schwingweite senkrecht zur Wellenlänge ausgerichtet ist. Die Wellenlänge und die Schwingweite sind vorzugsweise senkrecht zu der Haupterstreckungsrichtung des Verbindungsabschnitts ausgerichtet. Das Strukturelement kann Wellen von gleicher oder unterschiedlicher Amplitude in vertikaler Richtung aufweisen. Darüber hinaus kann die Wellenlänge gleich oder unterschiedlich sein. Die steifigkeitsverbessernde Wirkung des Strukturelements kann besonders vorteilhaft genutzt werden, wenn die Verbindungsabschnitte im Wesentlichen parallel zur Wandelementlänge ausgerichtet sind. Die Verbindungsabschnitte können alternativ auch gewinkelt zur Wandelementlänge ausgerichtet sein, beispielsweise im 45°-Winkel.

Ferner ist vorzugsweise vorgesehen, dass das Klebstoffmaterial ausgewählt ist aus der Gruppe bestehend aus Hot-Melt-Klebstoff, Polyurethanklebstoff, Epoxidharzklebstoff, und Cyanacrylat. Der Hot-Melt-Klebstoff kann eine Polyurethanbasis aufweisen mit einer Aushärtetemperatur von größer 140°C.

Insbesondere ist es bevorzugt, dass das Klebstoffmaterial eine Aushärtetemperatur von unter 250°C, vorzugsweise unter 90°C, insbesondere zwischen 75°C und 85°C, aufweist. Bei ausgewählten Klebstoffmaterialien kann die Aushärtung auch bei Raumtemperatur erfolgen.

In einer bevorzugten Ausführungsvariante der Windenergieanlagen-Komponente ist ferner vorgesehen, dass das erste Wandelement eine Wandstärke und das Strukturelement eine Strukturelementstärke aufweisen, und das Verhältnis von Strukturelementstärke zu Wandstärke größer 0,1, vorzugsweise größer 0,25 und ferner vorzugsweise größer 0,5 beträgt.

Unter einer Stärke wird hier insbesondere eine Materialdicke verstanden. Bei einem ersten Wandelement mit einem kreisrunden Querschnitt entspricht die Wandstärke jeweils der radialen Dicke des Materials des ersten Wandelements. Diese Definition ist in der Regel für das Strukturelement hingegen lediglich für die Verbindungsabschnitte gültig. Durch die gewellte Geometrie des Strukturelements weist dieses in radialer Richtung unterschiedliche Längen auf. Die Strukturelementstärke ist insbesondere als die Dicke des Strukturelements zu verstehen, die orthogonal zum Verlauf der Welle ausgerichtet ist.

Eine weitere bevorzugte Ausbildung der Windenergieanlagen-Komponente zeichnet sich dadurch aus, dass das Strukturelement aus Stahl, Aluminium und/oder Titan besteht oder Stahl, Aluminium und/oder Titan umfasst, und/oder das Strukturelement aus Kunststoffmaterial besteht oder dieses umfasst, wobei vorzugsweise das Kunststoffmaterial ein faserverstärkter Kunststoff ist, ferner vorzugsweise ein kurzfaserverstärkter Kunststoff ist und/oder ferner vorzugsweise ein glasfaserverstärkter Kunststoff ist. Das erste Wandelement besteht aus Stahl, Aluminium und/oder Titan oder umfasst Stahl, Aluminium und/oder Titan.

Ein aus Stahl hergestelltes Strukturelement zeichnet sich insbesondere durch seine kostengünstige Herstellung aus. Darüber hinaus ist ein aus Stahl bestehendes oder umfassendes Strukturelement elastisch und weist eine lange Lebensdauer auf.

Ein Kunststoffmaterial umfassendes Strukturelement oder ein aus Kunststoffmaterial hergestelltes Strukturelement zeichnet sich durch ein geringes Gewicht und eine gute Eigenschaft zum Kleben aus. Insbesondere faserverstärkte Kunststoffe können an die spezifischen Belastungssituationen einer in einem Windenergieanlagen-Turm oder in einem Rotorblatt verbauten Windenergieanlagen-Komponente angepasst werden. Die Belastungen an einer Windenergieanlagen-Komponente können in der Regel berechnet werden, sodass die anisotropen Eigenschaften faserverstärkter Kunststoffe genutzt werden können.

Stahl für das erste Wandelement zeichnet sich durch eine günstige Herstellung und gute Eigenschaften für den Bau von Windenergieanlagen-Türmen aus. Insbesondere ist die gute Elastizität bei gleichzeitiger Steifigkeit von Vorteil für Windenergieanlagen-Komponenten.

Darüber hinaus ist es bevorzugt, dass an der ersten Stoßseite ein erster Flansch und an der zweiten Stoßseite ein zweiter Flansch angeordnet ist, das gewellte Strukturelement eine Vielzahl von an die erste Stoßseite und/oder an die zweite Stoßseite angrenzenden Hohlräumen ausbildet, und mindestens einer der Hohlräume zumindest teilweise ein Füllmaterial, insbesondere Stahl und/oder Kunststoffmaterial, beispielsweise faserverstärkter Kunststoff, aufweist, wobei das Füllmaterial ausgebildet ist, dass eine Gewindestange zum Verbinden von zwei Windenergieanlagen-Komponenten einschraubbar ist, und/oder in mindestens einem der Hohlräume eine Gewindehülse angeordnet ist, wobei die Gewindehülse vorzugsweise eingeklebt ist, und die Gewindehülse ausgebildet ist, dass eine Gewindestange zum Verbinden von zwei Windenergieanlagen-Komponenten einschraubbar ist.

Das Strukturelement weist vorzugsweise zwischen zwei Verbindungsabschnitten, die in Richtung der Wellenlänge voneinander beabstandet sind, eine Vertiefung auf. Diese Vertiefung bildet bei entsprechender Anordnung des Strukturelements an dem ersten Wandelement einen Hohlraum aus.

Gemäß einer weiteren bevorzugten Fortbildung der Windenergieanlagen-Komponente ist vorgesehen, dass die Wellen des Strukturelements eine Beabstandung benachbarter Verbindungsabschnitte von kleiner 500 mm, kleiner 400 mm, kleiner 300 mm, kleiner 250 mm, kleiner 210 mm, kleiner 200 mm, kleiner 150 mm und/oder kleiner 100 mm aufweisen, und/oder das Strukturelement mehr als 20, mehr als 30, mehr als 40, mehr als 50, mehr als 60, mehr als 65 und/oder mehr als 70 Wellen aufweist, und/oder die Wellen des Strukturelements eine Schwingweite von mehr als 10 mm, mehr als 20 mm, mehr als 30 mm, mehr als 40 mm und/oder mehr als 50 mm aufweist.

Darüber hinaus kann es bevorzugt sein, dass die Wellen im Bereich ihrer Verbindungsabschnitte einen Radius aufweisen, wobei der Radius größer 0 mm, größer gleich 5 mm, größer gleich 10 mm, größer gleich 20 mm, größer gleich 30 mm, größer gleich 40 mm, größer gleich 50 mm und/oder größer gleich 60 mm ist.

Ferner vorzugsweise weist das Strukturelement orthogonal zu der Haupterstreckungsrichtung der Verbindungsabschnitte einen sinusförmigen Verlauf auf. Darüber hinaus kann das Strukturelement orthogonal zu der Haupterstreckungsrichtung der Verbindungsabschnitte einen trapezförmigen Verlauf aufweisen.

Die Windenergieanlagen-Komponente umfasst ein zweites Wandelement mit einerzweiten Innenfläche und einer dieser gegenüberliegend angeordneten zweiten Außenfläche, wobei das Strukturelement zwischen dem ersten Wandelement und dem zweiten Wandelement angeordnet ist, und das Strukturelement mit dem ersten Wandelement und dem zweiten Wandelement verbunden ist.

Das zweite Wandelement kann die gleichen Merkmale aufweisen, wie das im Vorherigen beschriebene erste Wandelement. Das zweite Wandelement besteht aus Stahl, Aluminium und/oder Titan oder umfasst Stahl, Aluminium und/oder Titan. Das zweite Wandelement ist vorzugsweise als Ringsegment oder als Teilringsegment ausgebildet und weist ferner vorzugsweise eine Rotationsachse auf. Das zweite Wandelement kann schalenförmig und/oder rotationssymmetrisch ausgebildet sein. Ferner vorzugsweise ist das zweite Wandelement oval und/oder polygonal ausgebildet.

Das zweite Wandelement weist vorzugsweise die gleiche Geometrie auf wie das erste Wandelement, wobei das zweite Wandelement vorzugsweise einen geringeren Durchmesser aufweist, sodass das zweite Wandelement in einem von dem ersten Wandelement gebildeten Hohlraum anordenbar ist. Durch eine derartige Anordnung ist die erste Innenfläche des ersten Wandelements der zweiten Außenfläche des zweiten Wandelements zugewandt. Vorzugsweise weist das erste Wandelement parallel zu seiner Rotationsachse eine Wandelementlänge auf, die im Wesentlichen der parallel zu der Rotationsachse des zweiten Wandelements ausgerichteten Wandelementlänge des zweiten Wandelements entspricht.

Ferner ist es bevorzugt, dass das Strukturelement eine erste Welle mit einem ersten Verbindungsabschnitt aufweist, der dem ersten Wandelement zugewandt ist, und das Strukturelement eine zweite Welle mit einem zweiten Verbindungsabschnitt aufweist, der dem zweiten Wandelement zugewandt ist, und das erste Wandelement mittels des ersten Verbindungsabschnitts mit dem Strukturelement verbunden ist und das zweite Wandelement mittels des zweiten Verbindungsabschnitts mit dem Strukturelement verbunden ist.

In einer weiteren bevorzugten Fortbildung der Windenergieanlagen-Komponente ist vorgesehen, dass sich das erste Wandelement mit einer Wandelementlänge zwischen einer ersten Stoßseite und einer zweiten Stoßseite erstreckt und sich das Strukturelement zwischen der ersten Stoßseite und der zweiten Stoßseite mit einer Strukturelementlänge erstreckt, und die Strukturelementlänge im Wesentlichen der Wandelementlänge entspricht.

Darüber hinaus kann vorgesehen sein, dass das Strukturelement derart angeordnet ist, dass die Verbindungsabschnitte mit ihrer Haupterstreckungsrichtung im Wesentlichen parallel zur Wandelementlänge ausgerichtet sind.

Es ist insbesondere bevorzugt, dass die Windenergieanlagen-Komponente als Turmabschnitt oder als Rotorblatt ausgebildet ist.

Gemäß einem weiteren Aspekt wird die eingangs genannte Aufgabe gelöst durch einen Windenergieanlagen-Turm umfassend mindestens eine Windenergieanlagen-Komponente gemäß mindestens einer der im Vorherigen beschriebenen Ausführungsvarianten.

Gemäß einem weiteren Aspekt wird die eingangs genannte Aufgabe gelöst durch ein Rotorblatt einer Windenergieanlage, umfassend mindestens eine Windenergieanlagen-Komponente gemäß mindestens einer der im Vorherigen beschriebenen Ausführungsvarianten.

Gemäß einem weiteren Aspekt wird die eingangs genannte Aufgabe gelöst durch eine Windenergieanlage, umfassend einen Windenergieanlagen-Turm gemäß dem im Vorherigen beschriebenen Aspekt und/oder ein Rotorblatt gemäß dem im Vorherigen beschriebenen Aspekt.

Gemäß einem weiteren Aspekt wird die eingangs genannte Aufgabe gelöst durch ein Verfahren zur Herstellung einer Windenergieanlagen-Komponente für eine Windenergieanlage nach Anspruch 14.

Das Verfahren umfasst ferner den Schritt Anordnen eines zweiten Wandelements in einem von dem ersten Wandelement gebildeten Hohlraum, Anordnen des Strukturelements zwischen dem ersten Wandelement und dem zweiten Wandelement, Verbinden des ersten Wandelements mit dem Strukturelement und/oder Verbinden des zweiten Wandelements mit dem Strukturelement, insbesondere mittels eines Klebstoffmaterials.

Das erfindungsgemäße Verfahren und seine möglichen Fortbildungen weisen Merkmale bzw. Verfahrensschritte auf, die sie insbesondere dafür geeignet machen, für eine erfindungsgemäße Windenergieanlagen-Komponente und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Windenergieanlagen-Komponente verwiesen.

Bevorzugte Ausführungsbeispiele werden exemplarisch anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, dreidimensionale Ansicht einer beispielhaften Ausführungsform eine Windenergieanlagen-Komponente;
- Fig. 3:: eine Detailansicht der in Fig. 2 gezeigten Windenergieanlagen-Komponente;
- Fig. 4:: eine schematische, dreidimensionale Ansicht einer beispielhaften Ausführungsform eines gewellten Strukturelements;
- Fig. 5:: eine schematische, zweidimensionale Querschnittsansicht einer Windenergieanlagen-Komponente;

- Fig. 6:: eine weitere schematische, zweidimensionale Querschnittsansicht einer Windenergieanlagen-Komponente;
- Fig. 7:: eine weitere schematische, zweidimensionale Querschnittsansicht einer Windenergieanlagen-Komponente; und
- Fig. 8:: ein schematisches Verfahren zur Herstellung einer Windenergieanlagen-Komponente für einen Windenergieanlagen-Turm.

In den Figuren sind gleiche oder im Wesentlichen funktionsgleiche bzw. -ähnliche Elemente mit den gleichen Bezugszeichen bezeichnet.

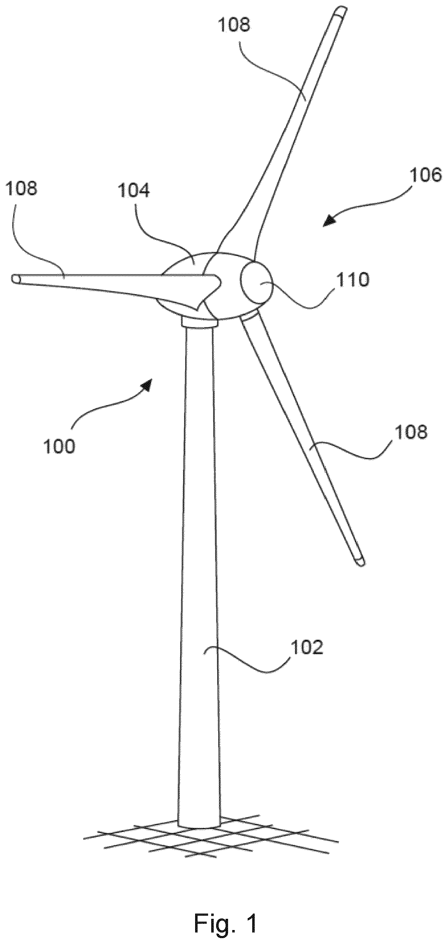

Fig. 1 zeigt eine schematische, dreidimensionale Ansicht einer beispielhaften Ausführungsform einer Windenergieanlage 100. Fig. 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 weist mindestens einen im Folgenden noch näher erläuterten Turmabschnitt 200 auf. Die Windenergieanlage 100 umfasst mindestens eine Windenergieanlagen-Komponente. Vorzugsweise sind ein, zwei, mehrere oder alle Abschnitte des Turmes 102 in analoger Weise wie die im Folgenden beschriebene als Turmabschnitt 200 ausgebildete Windenergieanlagen-Komponente vorgesehen.

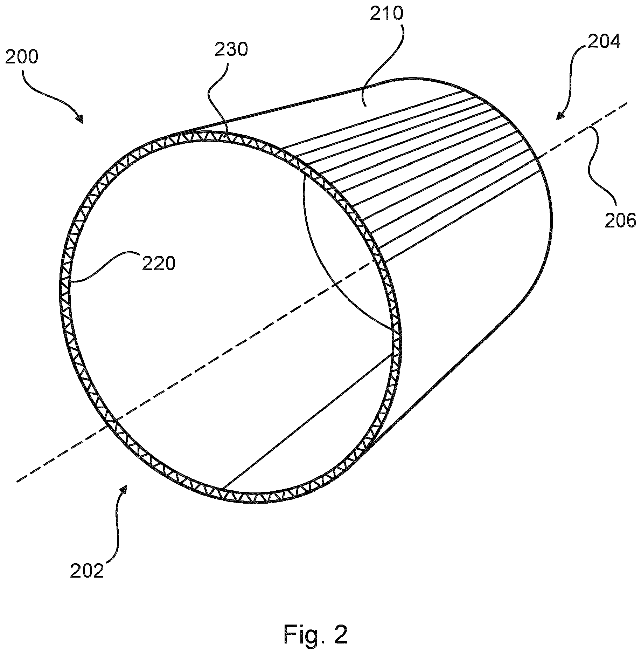

Fig. 2 zeigt eine schematische, dreidimensionale Ansicht einer beispielhaften Ausführungsform einer als Turmabschnitt ausgebildeten Windenergieanlagen-Komponente. Der Turmabschnitt 200 ist zylinderförmig ausgebildet. Der Turmabschnitt 200 erstreckt sich mit einer Turmabschnittslänge von einer oberen horizontalen Stoßseite 202 zu einer unteren horizontalen Stoßseite 204. An diesen Stoßseiten 202, 204 stößt der Turmabschnitt 200 im bestimmungsgemäßen Einbauzustand in einem Windenergieanlagen-Turm an weitere Turmabschnitte an.

Der Turmabschnitt 200 weist ein als Außenwandelement 210 ausgebildetes erstes Wandelement und ein als Innenwandelement 220 ausgebildetes zweites Wandelement auf. Das Außenwandelement 210 und das Innenwandelement 220 weisen eine Rotationsachse 206 auf. Das Außenwandelement 210 und das Innenwandelement 220 sind rotationssymmetrisch um die Rotationsachse 206 ausgebildet. Orthogonal zu der Rotationsachse 206 weisen das Außenwandelement 210 und das Innenwandelement 220 einen ringförmigen Querschnitt auf. Der Innendurchmesser des Außenwandelements 210 ist größer als der Außendurchmesser des Innenwandelements 220. Dadurch kann das Innenwandelement 220 innerhalb des Außenwandelements 210 angeordnet werden. Das Außenwandelement 210 und das Innenwandelement 220 sind koaxial zueinander angeordnet. Zwischen der oberen horizontalen Stoßseite 202 und der unteren horizontalen Stoßseite 204 erstreckt sich der Turmabschnitt 200 mit einer Turmabschnittslänge. In dieser Richtung weisen das Außenwandelement 210 und das Innenwandelement 220 die gleiche Länge auf.

Der Außendurchmesser des Innenwandelements 220 ist geringer als der Innendurchmesser des Außenwandelements 210. Dadurch entsteht zwischen dem Außenwandelement 210 und dem Innenwandelement 220 ein Hohlraum, bzw. ein Zwischenraum. Zwischen dem Außenwandelement und dem Innenwandelement ist in dem im Vorherigen genannten Hohlraum ein Strukturelement 230 angeordnet. Das Strukturelement 230 ist gewellt. Das Strukturelement 230 erstreckt sich zwischen der oberen horizontalen Stoßseite 202 und der unteren horizontalen Stoßseite 204 mit einer horizontalen Strukturelementlänge. Die Strukturelementlänge entspricht vorzugsweise der Turmabschnittslänge.

Die Turmabschnittslänge des Turmabschnitts 200 kann beispielsweise 24 Meter betragen. Der Außendurchmesser des Turmabschnitts 200 kann 4,3 Meter betragen. Die Beabstandung zwischen der Innenumfangsfläche des Außenwandelements 210 und der Außenumfangsfläche des Innenwandelements 220 beträgt vorzugsweise 30 mm. Die Schwingweite des Strukturelements 230 beträgt folglich ebenfalls vorzugsweise 30 mm, sodass ein erster Teil der Scheitelpunkte mit dem Außenwandelement 210 und ein zweiter Teil der Scheitelpunkte, der gegenüberliegend zu den Scheitelpunkten des ersten Teils angeordnet ist, mit dem Innenwandelement 220 verbindbar sind.

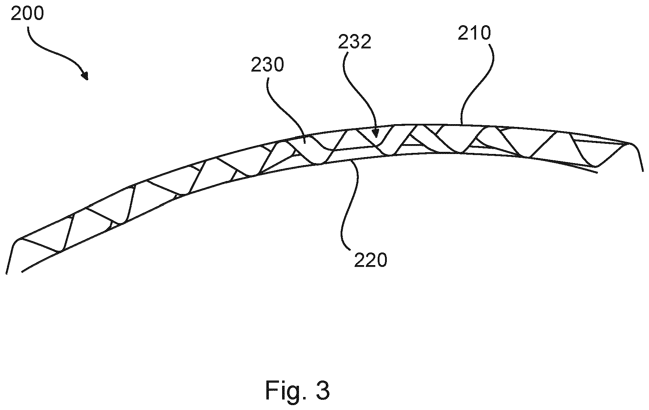

Fig. 3 zeigt eine Detailansicht des in Fig. 2 gezeigten Turmabschnitts 200. Die hier gezeigte Detailansicht zeigt die Ausbildung des Strukturelements 230 zwischen dem Außenwandelement 210 und dem Innenwandelement 220. Orthogonal zu einer radialen Richtung des Turmabschnitts 200 und orthogonal zu der Rotationsachse 206 erstreckt sich das Strukturelement 230 wellenförmig. Diese Wellen sind hier sinusförmig ausgebildet. Durch die gewellte Geometrie des Strukturelements 230 entsteht zwischen dem Außenwandelement 210 und dem Innenwandelement 220 eine Vielzahl an Hohlräumen 232.

Es ist bevorzugt, dass mindestens einer der Hohlräume 232 zumindest zum Teil ein Füllmaterial, insbesondere Stahl und/oder Kunststoffmaterial, beispielsweise faserverstärkter Kunststoff, aufweist, wobei das Füllmaterial ausgebildet ist, dass eine Gewindestange zum Verbinden von zwei Turmabschnitten einschraubbar ist. Darüber hinaus ist es bevorzugt, dass in mindestens einem der Hohlräume 232 eine Gewindehülse angeordnet ist, wobei die Gewindehülse vorzugsweise eingeklebt ist. Die Haupterstreckungsrichtung der Verbindungsabschnitte verläuft hier im Wesentlichen orthogonal zur Bildebene. Die Haupterstreckungsrichtungen der Verbindungsabschnitte sind hier derart ausgerichtet, dass diese parallel zur Turmabschnittslänge ausgerichtet ist. Dies bedeutet, dass die Haupterstreckungsrichtung der Verbindungsabschnitte im Wesentlichen parallel zur Rotationsachse 206 ausgerichtet sind.

Das Strukturelement 230 ist mit dem Außenwandelement 210 und mit dem Innenwandelement 220 verbunden. Das Strukturelement 230 stößt mit seinen Verbindungsabschnitten auf einer äußeren Seite des Strukturelements 230 an das Außenwandelement 210 an. Das Strukturelement 230 stößt mit Verbindungsabschnitten auf einer inneren Seite des Strukturelements 230 an das Innenwandelement 220 an. Das Strukturelement 230 ist mit dem Außenwandelement 210 mittels der Verbindungsabschnitte verbunden. Das Strukturelement 230 ist mit seinen Verbindungsabschnitten auch mit dem Innenwandelement 220 verbunden. Die Verbindung des Strukturelements 230 mit dem Innenwandelement 220 und dem Außenwandelement 210 kann mittels eines Klebstoffmaterials erfolgen. Insbesondere ist es bevorzugt, dass diese Verbindung schweißverbindungsfrei ausgebildet ist.

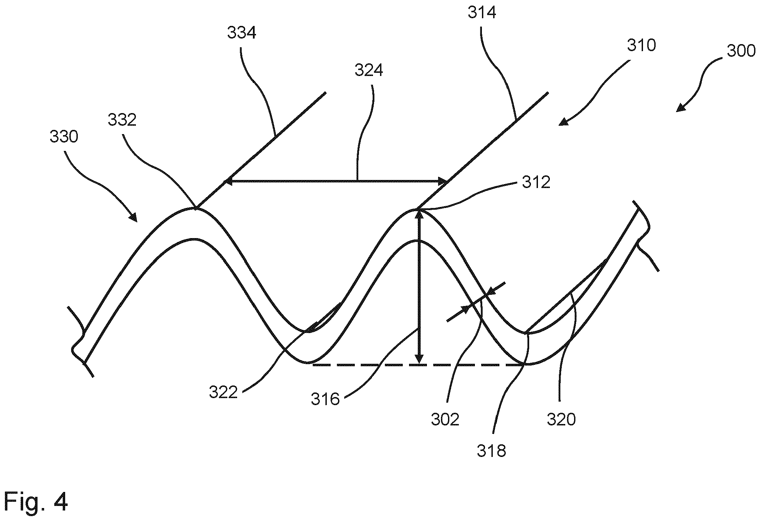

Fig. 4 zeigt eine schematische, dreidimensionale Ansicht einer beispielhaften Ausführungsform eines gewellten Strukturelements 300. Das Strukturelement 300 weist eine erste Welle 310 und eine zweite Welle 330 auf. Die erste Welle 310 erstreckt sich von einer ersten Senkenlinie 320 hin zu einer zweiten Senkenlinie 322. Die erste Senkenlinie 320 entspringt an einer Kante des Strukturelements 300 an einem Senkenpunkt 318. Zwischen der ersten Senkenlinie 320 und der zweiten Senkenlinie 322 weist das Strukturelement 300 einen ersten Scheitelpunkt 312 auf. Ausgehend von dem ersten Scheitelpunkt 312 verläuft orthogonal zu dem sinusförmigen Verlauf des Strukturelements 300 ein erster Verbindungsabschnitt 314. Orthogonal zu dem ersten Verbindungsabschnitt 314 erstreckt sich die erste Welle 310 in Richtung einer Schwingweite 316. Der erste Verbindungsabschnitt 314 weist eine ebene Kontaktfläche auf, mit der dieser an einem ersten oder zweiten Wandelement angeordnet werden kann.

Analog hierzu weist die zweite Welle 330 einen zweiten Scheitelpunkt 332 auf, von dem aus der zweite Verbindungsabschnitt 334 entspringt. Der zweite Verbindungsabschnitt 334 weist ebenfalls eine ebene Kontaktfläche auf, mit der dieser an einem ersten oder zweiten Wandelement angeordnet werden kann. Die Haupterstreckungsrichtung des ersten Verbindungsabschnitts 314 ist parallel zu der Haupterstreckungsrichtung des zweiten Verbindungsabschnitts 334 ausgerichtet. Das Strukturelement 300 weist einen Abstand 324 der Verbindungsabschnitte 314, 334 auf. Der Abstand 324 ist das Maß der geringsten Beabstandung des ersten Verbindungsabschnitts 314 von dem zweiten Verbindungsabschnitts 334. Das Strukturelement 300 weist darüber hinaus eine Strukturelementstärke 302 auf. Die Strukturelementstärke 302 entspricht im Wesentlichen der Materialdicke aus der das Strukturelement 300 hergestellt wurde.

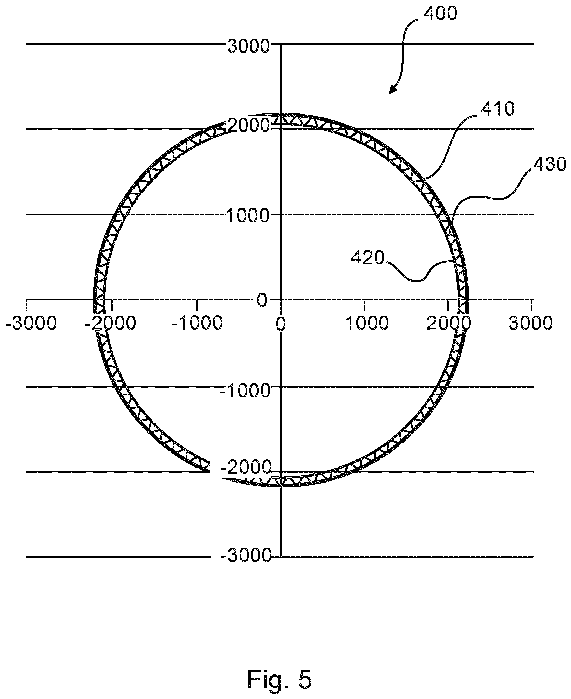

Fig. 5 zeigt eine schematische, zweidimensionale Querschnittsansicht einer als Turmabschnitt 400 ausgebildeten Windenergieanlagen-Komponente. Das Innenwandelement 420 weist einen Außendurchmesser von knapp 4000 mm auf. Das Außenwandelement 410 weist einen Innendurchmesser von knapp 4300 mm auf. Das Strukturelement 430 ist zwischen dem Außenwandelement 410 und dem Innenwandelement 420 angeordnet und weist einen sinusförmigen Verlauf in Ringrichtung auf.

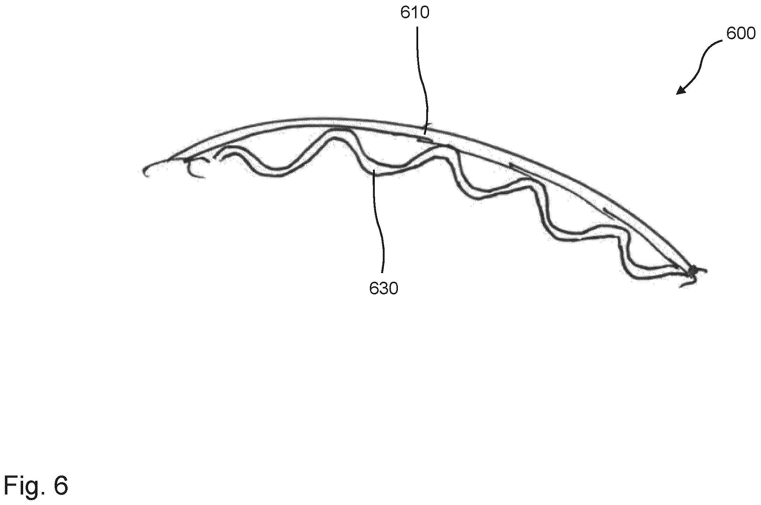

Fig. 6 zeigt eine weitere schematische, zweidimensionale Querschnittsansicht einer Windenergieanlagen-Komponente. Die Windenergieanlagen-Komponente 600 umfasst ein einzelnes Wandelement 610 und ein mit diesem verbundenes Strukturelement 630. Im Gegensatz zu den im Vorhergehenden gezeigten Ausführungsbeispielen umfasst die Windenergieanlagen-Komponente 600 lediglich ein Wandelement und kein zweites Wandelement. Das Wandelement 610 ist als Außenwandelement ausgebildet, sodass das Strukturelement an einer Innenfläche, insbesondere einer Innenumfangsfläche, des Wandelements 610 angeordnet ist.

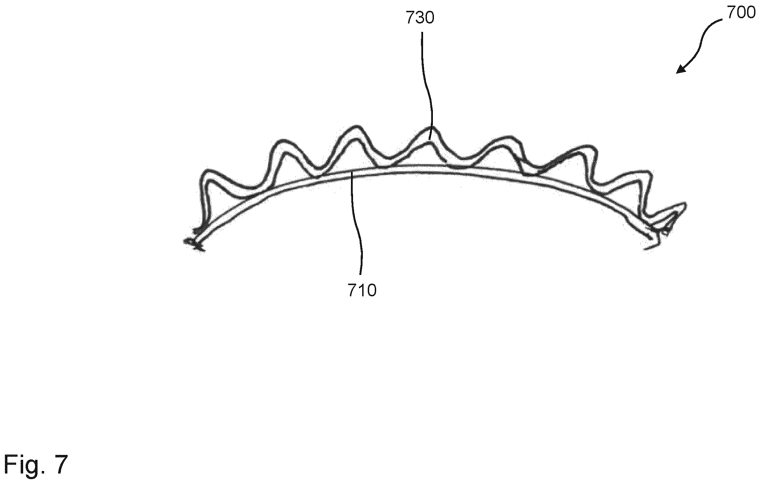

Fig. 7 zeigt eine weitere schematische, zweidimensionale Querschnittsansicht einer Windenergieanlagen-Komponente. Die Windenergieanlagen-Komponente 700 umfasst ein einzelnes Wandelement 710 und ein mit diesem verbundenes Strukturelement 730. Die hier gezeigte Windenergieanlagen-Komponente 700 unterscheidet sich von den im Vorhergehenden beschriebenen Ausführungsbeispielen dadurch, dass diese lediglich das als Innenwandelement ausgebildete Wandelement 710 umfasst und kein Außenwandelement aufweist. Das Strukturelement 730 ist an einer Innenumfangsfläche des Wandelements 710 angeordnet.

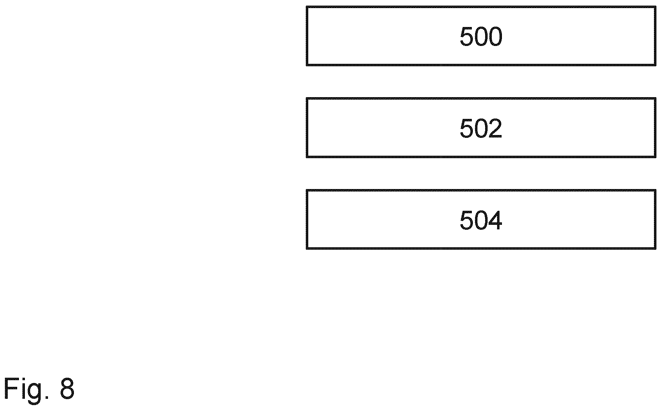

Fig. 8 zeigt ein schematisches Verfahren zur Herstellung eines Turmabschnitts für einen Windenergieanlagen-Turm. In Schritt 500 wird ein rotationssymmetrisches Innenwandelement 220, 420 in einem von einem rotationssymmetrischen Außenwandelement 210, 410 gebildeten Hohlraum angeordnet.

In Schritt 502 wird ein gewelltes Strukturelement 230, 300, 430 zwischen dem Außenwandelement 210, 410 und dem Innenwandelement 220, 420 angeordnet.

In Schritt 504 wird das Außenwandelement 210, 410 mit dem Strukturelement 230, 300, 430 verbunden, vorzugsweise mittels eines Klebstoffmaterials. Darüber hinaus oder alternativ kann im Schritt 504 das Innenwandelement 220, 420 mit dem Strukturelement 230, 300, 430 verbunden werden, vorzugsweise mittels eines Klebstoffmaterials.

Durch die Anordnung eines Strukturelements 230, 300, 430 zwischen einem Außenwandelement 210, 410 und einem Innenwandelement 220, 420 kann die Steifigkeit insbesondere die Knicksteifigkeit und die Biegesteifigkeit, eines Windenergieanlagen-Turmes gesteigert werden. Insbesondere ist diese Wirkung zu erreichen, indem die Haupterstreckungsrichtungen der Verbindungsabschnitte des gewellten Strukturelements 230, 300, 430 im Wesentlichen parallel zu einer Turmabschnittslängsrichtung und/oder einer Rotationsachse des Turmabschnitts 200, 400 des Außenwandelements 210, 410 und/ oder des Innenwandelements 220, 420 ausgerichtet sind. Durch diese verbesserte Steifigkeit des Turmabschnitts 200, 400 können die Windenergieanlagen-Türme 102 mit einem geringeren Außendurchmesser vorgesehen werden. Dieser geringere Außendurchmesser ermöglicht einerseits die Einsparung von Material und andererseits ermöglicht ein geringerer Außendurchmesser die bessere Logistik, beispielsweise bei der Anfahrt des Turmabschnitts 200, 400 zu einem Aufbauort einer Windenergieanlage 100. Darüber hinaus kann der Anteil der vertikal segmentierten Turmabschnitte reduziert oder dieser kann vermieden werden, da weniger Turmabschnitte die maximal transportierbare Abmessung von 4,3 m überschreiten.

### BEZUGSZEICHEN

- 100: Windenergieanlage
- 102: Turm
- 104: Gondel
- 106: Rotor
- 108: Rotorblätter
- 110: Spinner
- 200, 400, 600, 700: Windenergieanlagen-Komponente
- 202: obere horizontale Stoßseite
- 204: untere horizontale Stoßseite
- 206: Rotationsachse
- 210, 410, 610: erstes Wandelement
- 220, 420, 710: zweites Wandelement
- 230, 300, 430, 630, 730: Strukturelement
- 232: Hohlraum
- 302: Strukturelementstärke
- 310: erste Welle
- 312: erster Scheitelpunkt
- 314: erster Verbindungsabschnitt
- 316: Schwingweite
- 318: Senkenpunkt
- 320: erste Senkenlinie
- 322: zweite Senkenlinie
- 324: Abstand
- 330: zweite Welle
- 332: zweiter Scheitelpunkt
- 334: zweiter Verbindungsabschnitt

## Patentansprüche

1. Windenergieanlagen-Komponente (200, 400, 600, 700) für eine Windenergieanlage, insbesondere für einen Windenergieanlagen-Turm (102) und/oder ein Rotorblatt (108), umfassend
- ein erstes Wandelement (210, 410, 610) mit einer ersten Innenfläche und einer dieser gegenüberliegend angeordneten ersten Außenfläche,
- ein gewelltes Strukturelement (230, 300, 430, 630, 730),
- wobei das Strukturelement (230, 300, 430, 630, 730) an der ersten Innenfläche oder an der ersten Außenfläche angeordnet ist,
- wobei das erste Wandelement (210, 410, 610) mit dem Strukturelement (230, 300, 430, 630, 730) verbunden ist, weiter umfassend
- ein zweites Wandelement (220, 420, 710) mit einer zweiten Innenfläche und einer dieser gegenüberliegend angeordneten zweiten Außenfläche, wobei das Strukturelement (230, 300, 430, 630, 730) zwischen dem ersten Wandelement (210, 410, 610) und dem zweiten Wandelement (220, 420, 710) angeordnet ist, und das Strukturelement mit dem ersten Wandelement und dem zweiten Wandelement verbunden ist, und wobei
- das erste Wandelement (210, 220, 410, 420) und das zweite Wandelement (220, 420, 710) aus Stahl, Aluminium und/oder Titan bestehen oder diesen bzw. diese umfassen, und
- das erste Wandelement und das zweite Wandelement orthogonal zu einer Rotationsachse einen ringförmigen Querschnitt aufweisen.

2. Windenergieanlagen-Komponente (200, 400, 600, 700) gemäß Anspruch 1, wobei
- das erste Wandelement (210, 410) mit dem Strukturelement (230, 300, 430, 630, 730) mittels eines Klebstoffmaterials verbunden ist, und/oder
- die Verbindung zwischen dem ersten Wandelement (210, 410) und dem Strukturelement (230, 300, 430, 630, 730) schweißverbindungsfrei ausgebildet ist.

3. Windenergieanlagen-Komponente (200, 400, 600, 700) gemäß mindestens einem der vorherigen Ansprüche, wobei
- das Strukturelement (230, 300, 430, 630, 730) eine Vielzahl an Wellen (310, 330) aufweist, wobei mindestens eine Welle einen Verbindungsabschnitt (314, 334) umfasst, und
- das Strukturelement (230, 300, 430, 630, 730) mittels des Verbindungsabschnitts (314, 334) mit dem ersten Wandelement (210, 410) verbunden ist.

4. Windenergieanlagen-Komponente (200, 400, 600, 700) gemäß mindestens einem der beiden vorherigen Ansprüche, wobei das Klebstoffmaterial ausgewählt ist aus der Gruppe bestehend aus:
- Hot-Melt-Klebstoff;
- Polyurethanklebstoff;
- Epoxidharzklebstoff; und
- Cyanacrylat.

5. Windenergieanlagen-Komponente (200, 400, 600, 700) gemäß mindestens einem
der vorherigen zwei Ansprüche, wobei
- die Wellen (310, 330) des Strukturelements (230, 300, 430, 630, 730) eine Beabstandung (324) benachbarter Verbindungsabschnitte (314, 334) von kleiner 500 mm, kleiner 400 mm, kleiner 300 mm, kleiner 250 mm, kleiner 210 mm, kleiner 200 mm, kleiner 150 mm und/oder kleiner 100 mm aufweisen, und/oder
- das Strukturelement (230, 300, 430, 630, 730) mehr als 20, mehr als 30, mehr als 40, mehr als 50, mehr als 60, mehr als 65 und/oder mehr als 70 Wellen (314, 334) aufweist, und/oder
- die Wellen des Strukturelements (230, 300, 430, 630, 730) eine Schwingweite (316) von mehr als 10 mm, mehr als 20 mm, mehr als 30 mm, mehr als 40 mm und/oder mehr als 50 mm aufweisen, und/oder
- das erste Wandelement (210, 410) schalenförmig und/oder rotationssymmetrisch ausgebildet ist, und/oder
- vorzugsweise das erste Wandelement (210, 410) oval und/oder polygonal ausgebildet ist.

6. Windenergieanlagen-Komponente (200, 400, 600, 700) gemäß mindestens einem der vorherigen Ansprüche, wobei
- das Strukturelement (230, 300, 430, 630, 730) schalenförmig und/oder rotationssymmetrisch ausgebildet ist, und vorzugsweise im Wesentlichen zylinderförmig und/oder kegelförmig ausgebildet ist, und/oder
- das erste Wandelement (210, 410) eine Wandstärke und das Strukturelement (230, 300, 430, 630, 730) eine Strukturelementstärke (302) aufweisen, und das Verhältnis von Strukturelementstärke zu Wandstärke größer 0,1, vorzugsweise größer 0,25 und ferner vorzugsweise größer 0,5 beträgt.

7. Windenergieanlagen-Komponente (200, 400, 600, 700) gemäß mindestens einem der vorherigen Ansprüche, wobei
- das Strukturelement (230, 300, 430, 630, 730) Stahl, Aluminium und/oder Titan umfasst, und/oder
- das Strukturelement (230, 300, 430, 630, 730) Kunststoffmaterial umfasst, wobei vorzugsweise das Kunststoffmaterial ein faserverstärkter Kunststoff ist, ferner vorzugsweise ein kurzfaserverstärkter Kunststoff ist und/oder ferner vorzugsweise ein glasfaserverstärkter Kunststoff ist.

8. Windenergieanlagen-Komponente (200, 400, 600, 700) gemäß mindestens einem der vorherigen Ansprüche, wobei
- das Strukturelement (230, 300, 430, 630, 730) eine erste Welle mit einem ersten Verbindungsabschnitt (314) aufweist, der dem ersten Wandelement (210, 410, 610) zugewandt ist, und das Strukturelement (230, 300, 430, 630, 730) eine zweite Welle mit einem zweiten Verbindungsabschnitt (334) aufweist, der dem zweiten Wandelement (220, 420, 710) zugewandt ist, und das erste Wandelement mittels des ersten Verbindungsabschnitts mit dem Strukturelement (230, 300, 430, 630, 730) verbunden ist und das zweite Wandelement mittels des zweiten Verbindungsabschnitts mit dem Strukturelement verbunden ist, und/oder
- sich das erste Wandelement (200, 400) mit einer Wandelementlänge zwischen einer ersten Stoßseite (202) und einer zweiten Stoßseite (204) erstreckt und sich das Strukturelement (230, 300, 430, 630, 730) zwischen der ersten Stoßseite (202) und der zweiten Stoßseite (204) mit einer Strukturelementlänge erstreckt, und die Strukturelementlänge im Wesentlichen der Wandelementlänge entspricht, und/oder
- das Strukturelement (230, 300, 430, 630, 730) derart angeordnet ist, dass Verbindungsabschnitte (314, 334) mit ihrer Haupterstreckungsrichtung im Wesentlichen parallel zur Wandelementlänge ausgerichtet sind.

9. Windenergieanlagen-Komponente (200, 400, 600, 700) gemäß dem vorherigen Anspruch, wobei
- an der ersten Stoßseite (202) ein erster Flansch und an der zweiten Stoßseite (204) ein zweiter Flansch angeordnet ist,
- das Strukturelement (230, 300, 430, 630, 730) eine Vielzahl von an die erste Stoßseite (202) und/oder an die zweite Stoßseite (204) angrenzenden Hohlräumen (232) ausbildet, und
- mindestens einer der Hohlräume (232) zumindest teilweise ein Füllmaterial, insbesondere Stahl und/oder Kunststoffmaterial, beispielsweise faserverstärkter Kunststoff, aufweist, wobei das Füllmaterial ausgebildet ist, dass eine Gewindestange zum Verbinden von zwei Windenergieanlagen-Komponenten (200, 400) einschraubbar ist, und/oder
- in mindestens einem der Hohlräume (232) eine Gewindehülse angeordnet ist, wobei die Gewindehülse vorzugsweise eingeklebt ist, und die Gewindehülse ausgebildet ist, dass eine Gewindestange zum Verbinden von zwei Windenergieanlagen-Komponenten (200, 400) einschraubbar ist.

10. Windenergieanlagen-Komponente (200, 400, 600, 700) gemäß mindestens einem der vorherigen Ansprüche, wobei diese als Turmabschnitt oder als Rotorblatt ausgebildet ist.

11. Windenergieanlagen-Turm (102) umfassend mindestens eine Windenergieanlagen-Komponente (200, 400) gemäß mindestens einem der vorherigen Ansprüche 1-10.

12. Rotorblatt (108) einer Windenergieanlage, umfassend mindestens eine Windenergieanlagen-Komponente (200, 400) gemäß mindestens einem der vorherigen Ansprüche 1-10.

13. Windenergieanlage (100), umfassend einen Windenergieanlagen-Turm (102) gemäß Anspruch 11 und/oder ein Rotorblatt (108) gemäß Anspruch 12.

14. Verfahren zur Herstellung einer Windenergieanlagen-Komponente (200, 400, 600, 700) für eine Windenergieanlage, insbesondere für einen Windenergieanlagen-Turm (102) und/oder ein Rotorblatt (108), umfassend
- Anordnen eines gewellten Strukturelements (230, 300, 430, 630, 730) an einer ersten Innenfläche oder an einer dieser gegenüberliegend angeordneten ersten Außenfläche eines ersten Wandelements (210, 410), und
- Verbinden des ersten Wandelements mit dem Strukturelement,
- Anordnen eines zweiten Wandelements (220, 420) in einem von dem ersten Wandelement (210, 410) gebildeten Hohlraum,
- Anordnen des Strukturelements (230, 300, 430) zwischen dem ersten Wandelement (210, 410) und dem zweiten Wandelement (220, 420),
- Verbinden des ersten Wandelements (210, 410) mit dem Strukturelement (230, 300, 430) und/oder Verbinden des zweiten Wandelements (220, 420) mit dem Strukturelement (230, 300, 430), und wobei
- das erste Wandelement (210, 220, 410, 420) und das zweite Wandelement (220, 420, 710) aus Stahl, Aluminium und/oder Titan bestehen oder diesen bzw. diese umfassen, und
- das erste Wandelement und das zweite Wandelement orthogonal zu einer Rotationsachse einen ringförmigen Querschnitt aufweisen.

15. Verfahren gemäß dem vorherigen Anspruch, umfassend
- Verbinden des ersten Wandelements (210, 410) mit dem Strukturelement (230, 300, 430) und/oder Verbinden des zweiten Wandelements (220, 420) mit dem Strukturelement (230, 300, 430) mittels eines Klebstoffmaterials.

## Claims

1. A wind turbine component (200, 400, 600, 700) for a wind turbine, in particular for a wind turbine tower (102) and/or a rotor blade (108), comprising
- a first wall element (210, 410, 610) with a first inner surface and a first outer surface arranged opposite the latter,
- a corrugated structural element (230, 300, 430, 630, 730),
- wherein the structural element (230, 300, 430, 630, 730) is arranged on the first inner surface or on the first outer surface,
- wherein the first wall element (210, 410, 610) is connected to the structural element (230, 300, 430, 630, 730),
further comprising
- a second wall element (220, 420, 710) with a second inner surface and a second outer surface arranged opposite the latter, wherein the structural element (230, 300, 430, 630, 730) is arranged between the first wall element (210, 410, 610) and the second wall element (220, 420, 710), and the structural element is connected to the first wall element and the second wall element, and
wherein
- the first wall element (210, 220, 410, 420) and the second wall element (220, 420, 710) are composed of or comprise steel, aluminum and/or titanium, and
- the first wall element and the second wall element have a ring-shaped cross section orthogonally with respect to the axis of rotation.

2. The wind turbine component (200, 400, 600, 700) as claimed in claim 1, wherein
- the first wall element (210, 410) is connected to the structural element (230, 300, 430, 630, 730) by means of an adhesive material, and/or
- the connection between the first wall element (210, 410) and the structural element (230, 300, 430, 630, 730) is formed without welded joints.

3. The wind turbine component (200, 400, 600, 700) as claimed in at least one of the preceding claims, wherein
- the structural element (230, 300, 430, 630, 730) has a plurality of corrugations (310, 330), wherein at least one corrugation comprises a connecting section (314, 334), and
- the structural element (230, 300, 430, 630, 730) is connected to the first wall element (210, 410) by means of the connecting section (314, 334).

4. The wind turbine component (200, 400, 600, 700) as claimed in at least one of the two preceding claims, wherein the adhesive material is selected from the group consisting of:
- hot-melt adhesive;
- polyurethane adhesive;
- epoxy resin adhesive; and
- cyanoacrylate.

5. The wind turbine component (200, 400, 600, 700) as claimed in at least one of the preceding claims, wherein
- the corrugations (310, 330) of the structural element (230, 300, 430, 630, 730) have a spacing (324) between adjacent connecting sections (314, 334) of less than 500 mm, less than 400 mm, less than 300 mm, less than 250 mm, less than 210 mm, less than 200 mm, less than 150 mm and/or less than 100 mm, and/or
- the structural element (230, 300, 430, 630, 730) has more than 20, more than 30, more than 40, more than 50, more than 60, more than 65 and/or more than 70 corrugations (310, 330), and/or
- the corrugations of the structural element (230, 300, 430, 630, 730) have an amplitude (316) of more than 10 mm, more than 20 mm, more than 30 mm, more than 40 mm and/or more than 50 mm, and/or
- the first wall element (210, 410) is of shell-shaped and/or rotationally symmetrical configuration, and/or
- preferably the first wall element (210, 410) is of oval and/or polygonal configuration.

6. The wind turbine component (200, 400, 600, 700) as claimed in at least one of the preceding claims, wherein
- the structural element (230, 300, 430, 630, 730) is of shell-shaped and/or rotationally symmetrical configuration, and
- is preferably of substantially cylindrical and/or conical configuration, and/or
- the first wall element (210, 410) has a wall thickness and the structural element (230, 300, 430, 630, 730) has a structural element thickness (302), and the ratio of structural element thickness to wall thickness is greater than 0.1, preferably greater than 0.25, and further preferably greater than 0.5.

7. The wind turbine component (200, 400, 600, 700) as claimed in at least one of the preceding claims, wherein
- the structural element (230, 300, 430, 630, 730) comprises steel, aluminum and/or titanium, and/or
- the structural element (230, 300, 430, 630, 730) comprises plastics material, wherein preferably the plastics material is a fiber-reinforced plastic, further preferably is a short-fiber-reinforced plastic and/or further preferably is a glass-fiber-reinforced plastic.

8. The wind turbine component (200, 400, 600, 700) as claimed in at least one of the preceding claims, wherein
- the structural element (230, 300, 430, 630, 730) has a first corrugation with a first connecting section (314) facing toward the first wall element (210, 410, 610), and the structural element (230, 300, 430, 630, 730) has a second corrugation with a second connecting section (334) facing toward the second wall element (220, 420, 710), and the first wall element is connected to the structural element (230, 300, 430, 630, 730) by means of the first connecting section and the second wall element is connected to the structural element by means of the second connecting section, and/or
- the first wall element (200, 400) extends with a wall element length between a first abutment side (202) and a second abutment side (204) and the structural element (230, 300, 430, 630, 730) extends with a structural element length between the first abutment side (202) and the second abutment side (204), and the structural element length corresponds substantially to the wall element length, and/or
- the structural element (230, 300, 430, 630, 730) is arranged in such a way that the connecting sections (314, 334) have their main direction of extent oriented substantially parallel to the wall element length.

9. The wind turbine component (200, 400, 600, 700) as claimed in the preceding claim, wherein
- a first flange is arranged on the first abutment side (202) and a second flange is arranged on the second abutment side (204),
- the structural element (230, 300, 430, 630, 730) forms a multiplicity of cavities (232) adjoining the first abutment side (202) and/or the second abutment side (204), and
- at least one of the cavities (232) at least partially comprises a filling material, in particular steel and/or plastics material, for example fiber-reinforced plastic, wherein the filling material is configured such that a threaded rod for connection of two wind turbine components (200, 400) can be screwed in, and/or
- a threaded sleeve is arranged in at least one of the cavities (232), wherein the threaded sleeve is preferably glued in, and the threaded sleeve is configured such that a threaded rod for connection of two wind turbine components (200, 400) can be screwed in.

10. The wind turbine component (200, 400, 600, 700) as claimed in at least one of the preceding claims, wherein said component is configured in the form of a tower section or in the form of a rotor blade.

11. A wind turbine tower (102), comprising at least one wind turbine component (200, 400) as claimed in at least one of the preceding claims 1-10.

12. A rotor blade (108) of a wind turbine, comprising at least one wind turbine component (200, 400) as claimed in at least one of the preceding claims 1-10.

13. A wind turbine (100), comprising a wind turbine tower (102) as claimed in claim 11 and/or a rotor blade (108) as claimed in claim 12.

14. A method for producing a wind turbine component (200, 400, 600, 700) for a wind turbine, in particular for a wind turbine tower (102) and/or a rotor blade (108), comprising
- arranging a corrugated structural element (230, 300, 430, 630, 730) on a first inner surface or on a first outer surface, which is arranged opposite the latter, of a first wall element (210, 410), and
- connecting the first wall element to the structural element,
**characterized by**
- arranging a second wall element (220, 420) in a cavity formed by the first wall element (210, 410),
- arranging the structural element (230, 300, 430) between the first wall element (210, 410) and the second wall element (220, 420),
- connecting the first wall element (210, 410) to the structural element (230, 300, 430) and/or connecting the second wall element (220, 420) to the structural element (230, 300, 430), and
**characterized in that**
- the first wall element (210, 220, 410, 420) and the second wall element (220, 420, 710) are composed of or comprise steel, aluminum and/or titanium, and
- the first wall element and the second wall element have a ring-shaped cross section orthogonally with respect to the axis of rotation.

15. The method as claimed in the preceding claim, comprising
- connecting the first wall element (210, 410) to the structural element (230, 300, 430) and/or connecting the second wall element (220, 420) to the structural element (230, 300, 430), by means of an adhesive material.

## Revendications

1. Composant d'éolienne (200, 400, 600, 700) pour une éolienne, en particulier pour un mât d'éolienne (102) et/ou une pale de rotor (108), comprenant
- un premier élément de paroi (210, 410, 610) avec une première surface interne et une première surface externe disposée de manière à faire face à celle-ci,
- un élément structural ondulé (230, 300, 430, 630, 730) ,
- dans lequel l'élément structural (230, 300, 430, 630, 730) est disposé sur la première surface interne ou sur la première surface externe,
- dans lequel le premier élément de paroi (210, 410, 610) est relié à l'élément structural (230, 300, 430, 630, 730),
comprenant par ailleurs
- un deuxième élément de paroi (220, 420, 710) avec une deuxième surface interne et une deuxième surface externe disposée de manière à faire face à celle-ci, dans lequel l'élément structural (230, 300, 430, 630, 730) est disposé entre le premier élément de paroi (210, 410, 610) et le deuxième élément de paroi (220, 420, 710) et l'élément structural est relié au premier élément de paroi et au deuxième élément de paroi, et
dans lequel
- le premier élément de paroi (210, 220, 410, 420) et le deuxième élément de paroi (220, 420, 710) sont constitués d'acier, d'aluminium et/ou de titane ou comprennent ceux-ci, et
- le premier élément de paroi et le deuxième élément de paroi présentent une section transversale annulaire de manière orthogonale à un axe de rotation.

2. Composant d'éolienne (200, 400, 600, 700) selon la revendication 1, dans lequel
- le premier élément de paroi (210, 410) est relié à l'élément structural (230, 300, 430, 630, 730) au moyen d'un matériau adhésif, et/ou
- la liaison entre le premier élément de paroi (210, 410) et l'élément structural (230, 300, 430, 630, 730) est réalisée sans liaison par soudage.

3. Composant d'éolienne (200, 400, 600, 700) selon au moins l'une quelconque des revendications précédentes, dans lequel
- l'élément structural (230, 300, 430, 630, 730) présente une pluralité de parties ondulées (310, 330), dans lequel au moins une partie ondulée comprend une section de liaison (314, 334), et
- l'élément structural (230, 300, 430, 630, 730) est relié au premier élément de paroi (210, 410) au moyen de la section de liaison (314, 334).

4. Composant d'éolienne (200, 400, 600, 700) selon au moins l'une quelconque des deux revendications précédentes, dans lequel le matériau adhésif est choisi parmi le groupe constitué de :
- colle thermofusible ;
- de colle à base de polyuréthane ;
- de colle à base de résine époxy ; et
- de cyanoacrylate.

5. Composant d'éolienne (200, 400, 600, 700) selon au moins l'une quelconque des deux revendications précédentes, dans lequel
- les parties ondulées (310, 330) de l'élément structural (230, 300, 430, 630, 730) présentent un espacement (324) entre sections de liaison (314, 334) adjacentes inférieur à 500 mm, inférieur à 400 mm, inférieur à 300 mm, inférieur à 250 mm, inférieur à 210 mm, inférieur à 200 mm, inférieur à 150 mm et/ou inférieur à 100 mm, et/ou
- l'élément structural (230, 300, 430, 630, 730) présente plus de 20, plus de 30, plus de 40, plus de 50, plus de 60, plus de 65 et/ou plus de 70 parties ondulées (314, 334), et/ou
- les parties ondulées de l'élément structural (230, 300, 430, 630, 730) présentent une largeur d'oscillation (316) supérieure à 10 mm, supérieure à 20 mm, supérieure à 30 mm, supérieure à 40 mm et/ou supérieure à 50 mm, et/ou
- le premier élément de paroi (210, 410) est réalisé en forme de cuvette et/ou de manière symétrique en rotation, et/ou
- de préférence le premier élément de paroi (210, 410) est réalisé de manière ovale et/ou de manière polygonale.

6. Composant d'éolienne (200, 400, 600, 700) selon au moins l'une quelconque des revendications précédentes, dans lequel
- l'élément structural (230, 300, 430, 630, 730) est réalisé en forme de cuvette et/ou de manière symétrique en rotation, et est réalisé de préférence sensiblement de manière cylindrique et/ou de manière conique, et/ou
- le premier élément de paroi (210, 410) présente une épaisseur de paroi et l'élément structural (230, 300, 430, 630, 730) présente une épaisseur d'élément structural (302), et le rapport de l'épaisseur d'élément structural par rapport à l'épaisseur de paroi est supérieur à 0,1, de préférence est supérieur à 0,25 et en outre de préférence est supérieur à 0,5.

7. Composant d'éolienne (200, 400, 600, 700) selon au moins l'une quelconque des revendications précédentes, dans lequel
- l'élément structural (230, 300, 430, 630, 730) comprend de l'acier, de l'aluminium et/ou du titane, et/ou
- l'élément structural (230, 300, 430, 630, 730) comprend du matériau en matière plastique, dans lequel de préférence le matériau en matière plastique est une matière plastique renforcée par des fibres, en outre est de préférence une matière plastique renforcée par des fibres courtes, et/ou est en outre de préférence une matière plastique renforcée par des fibres de verre.

8. Composant d'éolienne (200, 400, 600, 700) selon au moins l'une quelconque des revendications précédentes, dans lequel
- l'élément structural (230, 300, 430, 630, 730) présente une première partie ondulée avec une première section de liaison (314), qui est tournée vers le premier élément de paroi (210, 410, 610), et l'élément structural (230, 300, 430, 630, 730) présente une deuxième partie ondulée avec une deuxième section de liaison (334), qui est tournée vers le deuxième élément de paroi (220, 420, 710), et le premier élément de paroi est relié à l'élément structural (230, 300, 430, 630, 730) au moyen de la première section de liaison et le deuxième élément de paroi est relié à l'élément structural au moyen de la deuxième section de liaison, et/ou
- le premier élément de paroi (200, 400) s'étend avec une longueur d'élément de paroi entre un premier côté d'aboutement (202) et un deuxième côté d'aboutement (204) et l'élément structural (230, 300, 430, 630, 730) s'étend entre le premier côté d'aboutement (202) et le deuxième côté d'aboutement (204) avec une longueur d'élément structural, et la longueur d'élément structural correspond sensiblement à la longueur d'élément de paroi, et/ou
- l'élément structural (230, 300, 430, 630, 730) est disposé de telle manière que des sections de liaison (314, 334) sont orientées par leur sens d'extension principale sensiblement de manière parallèle par rapport à la longueur d'élément de paroi.

9. Composant d'éolienne (200, 400, 600, 700) selon la revendication précédente, dans lequel
- une première bride est disposée sur le premier côté d'aboutement (202) et une deuxième bride est disposée sur le deuxième côté d'aboutement (204),
- l'élément structural (230, 300, 430, 630, 730) réalise une pluralité d'espaces creux (232) jouxtant le premier côté d'aboutement (202) et/ou le deuxième côté d'aboutement (204), et
- au moins un des espaces creux (232) présente au moins en partie un matériau de remplissage, en particulier de l'acier et/ou un matériau en matière plastique, par exemple une matière plastique renforcée par des fibres, dans lequel le matériau de remplissage est réalisé pour qu'une tige filetée puisse être vissée pour relier deux composants d'éolienne (200, 400), et/ou
- une douille filetée est disposée dans au moins un des espaces creux (232), dans lequel la douille filetée est collée de préférence, et la douille filetée est réalisée pour qu'une tige filetée puisse être vissée pour relier deux composants d'éolienne (200, 400).

10. Composant d'éolienne (200, 400, 600, 700) selon au moins l'une quelconque des revendications précédentes, dans lequel celui-ci est réalisé en tant que section de mât ou en tant que pale de rotor.

11. Mât d'éolienne (102) comprenant au moins un composant d'éolienne (200, 400) selon au moins l'une quelconque des revendications précédentes 1 - 10.

12. Pale de rotor (108) d'une éolienne, comprenant au moins un composant d'éolienne (200, 400) selon au moins l'une quelconque de revendications précédentes 1 - 10.

13. Eolienne (100) comprenant un mât d'éolienne (102) selon la revendication 11 et/ou une pale de rotor (108) selon la revendication 12.

14. Procédé de fabrication d'un composant d'éolienne (200, 400, 600, 700) pour une éolienne, en particulier pour un mât d'éolienne (102) et/ou une pale de rotor (108), comprenant
- la disposition d'un élément structural (230, 300, 430, 630, 730) ondulé sur une première surface interne ou sur une première surface externe disposée de manière à faire face à celle-ci d'un premier élément de paroi (210, 410), et
- la liaison du premier élément de paroi à l'élément structural,
- la disposition d'un deuxième élément de paroi (220, 420) dans un espace creux formé par le premier élément de paroi (210, 410),
- la disposition de l'élément structural (230, 300, 430) entre le premier élément de paroi (210, 410) et le deuxième élément de paroi (220, 420),
- la liaison du premier élément de paroi (210, 410) à l'élément structural (230, 300, 430) et/ou la liaison du deuxième élément de paroi (220, 420) à l'élément structural (230, 300, 430), et
dans lequel
- le premier élément de paroi (210, 220, 410, 420) et le deuxième élément de paroi (220, 420, 710) sont constitués d'acier, d'aluminium et/ou de titane ou comprennent ceux-ci, et
- le premier élément de paroi et le deuxième élément de paroi présentent une section transversale annulaire de manière orthogonale par rapport à un axe de rotation.

15. Procédé selon la revendication précédente, comprenant
- la liaison du premier élément de paroi (210, 410) à l'élément structural (230, 300, 430) et/ou la liaison du deuxième élément de paroi (220, 420) à l'élément structural (230, 300, 430) au moyen d'un matériau adhésif.
